# EUROPÄISCHE PATENTSCHRIFT

(11) **EP 2 801 512 B1**
(45) Veröffentlichungstag und Bekanntmachung des Hinweises auf die Patenterteilung: **07.10.2020**
(21) Anmeldenummer: 13166917.8
(22) Anmeldetag: 07.05.2013
(51) Int. Cl.: B62D 29/00, B60K 15/03, B29C 67/00

(54) **Verbundstruktur mit generativ gefertigter Funktionsstruktur**
Composite structure with functional structure manufactured in a generative manner
Structure composite dotée d'une structure fonctionnelle fabriquée de façon additive

(43) Veröffentlichungstag der Anmeldung: 12.11.2014
(73) Patentinhaber: EDAG Engineering GmbH, 65205 Wiesbaden (DE); Fraunhofer-Gesellschaft zur Förderung der angewandten Forschung e.V., 80686 München (DE)
(72) Erfinder: Hillebrecht, Martin, 36100 Petersberg (DE); Reul, Wolfgang, 36124 Eichenzell (DE); Barckmann, Johannes, 36041 Fulda (DE); Emmelmann, Claus, 21220 Seevetal (DE)
(74) Vertreter: Isarpatent

(56) Entgegenhaltungen:
- EP-A1- 2 617 629
- EP-A1- 2 653 369
- WO-A1-2009/088423
- WO-A1-2013/021201
- WO-A1-2013/160188
- WO-A1-2013/180848
- DE-A1-102010 014 747
- DE-A1-102014 101 907
- DE-A1-102015 014 410
- DE-B3-102015 201 425
- GB-A- 2 399 049
- US-A- 5 635 243
- US-A1- 2002 047 229
- US-A1- 2008 006 966
- US-A1- 2008 149 313
- "Metal Additive Manufacturing Case Studies / Titanium F1 Roll Hoop proves concept Titanium F1 Roll Hoop proves concept", , 10. Januar 2013 (2013-01-10), XP055083906, Autosport International 2013 - Birmingham NEC (UK) Gefunden im Internet: URL:http://www.3trpd.co.uk/portfolio/titan ium-f1-roll-hoop-proves-concept/gallery/au tomotive-case-studies/ [gefunden am 2013-10-14]

## Beschreibung

Die Erfindung betrifft eine Verbundstruktur und ein Verfahren zur Herstellung einer Verbundstruktur für eine Fahrzeugkarosserie oder ein Anbauteil einer Fahrzeugkarosserie. Ein bevorzugtes Anwendungsgebiet ist der Automobilbau, d.h. Automobile jeder Art, wie insbesondere Personenkraftwagen, grundsätzlich aber auch Omnibusse, Lastkraftwagen und andere Nutzfahrzeuge wie Baufahrzeuge, sowie land- und forstwirtschaftliche Fahrzeuge. Siehe hierzu XP055083906.

Karosserien, insbesondere von Personenkraftwagen, bestehen zumindest überwiegend aus Leichtbaustrukturen, die aufgrund diverser Optimierungen, etwa zur Reduzierung des Gewichts durch optimierte Aufnahme und Verteilung von Kräften und Momenten oder des aerodynamischen Widerstands geformt sind. Hieraus ergeben sich geometrisch komplexe, in unterschiedlichsten Querschnittsprofilen geformte, verzweigte und in Knoten miteinander verbundene, auch mehrdimensional verwölbte Karosseriestrukturen, beispielsweise Längsträger, Querträger und Strukturknoten, ferner Schalenkörper, wie etwa Radhausschalen, Schweller, Seitenwände, Kotflügel und Karosseriesäulen. Ein weiterer Treiber für zunehmende Komplexität sind das Streben nach Einsparung von Kraftstoff oder elektrischer Antriebsenergie und Erhöhung der Sicherheit für Fahrzeuginsassen. Damit einher geht eine Vergrößerung der Anzahl unterschiedlicher Systeme und Teile, die auf immer engerem Raum untergebracht werden müssen.

Vor diesem Hintergrund ist es eine Aufgabe der Erfindung, Fahrzeugkarosseriestrukturen oder Anbauteile von Fahrzeugkarosserien strukturell oder funktional zu verbessern.

Die Erfindung geht von einer Verbundstruktur aus, die eine Basisstruktur und eine fest mit der Basisstruktur verbundene Funktionsstruktur umfasst. Bei der Basisstruktur handelt es sich um ein Strukturteil für eine Fahrzeugkarosserie oder ein Anbauteil einer Fahrzeugkarosserie. Unter einem Anbauteil versteht die Erfindung insbesondere Fahrzeugtüren, Motorhauben, Heckklappen und Schiebedächer, also Basisstrukturen, die im fertigen Fahrzeug mit der eigentlichen Fahrzeugkarosserie mittels Dreh- oder Schubgelenk oder andersartig gelenkig verbunden sind. Die Verbundstruktur kann Bestandteil des fertigen Fahrzeugs oder der Rohkarosserie oder der mit Anbauteilen versehenen Fahrzeugkarosserie sein. Die Erfindung betrifft Verbundstrukturen aber auch als solche, d.h. vor dem Fügen mit einer oder mehreren anderen Strukturen eines Fahrzeugs, insbesondere der Fahrzeugkarosserie.

Nach der Erfindung wird die Funktionsstruktur generativ geformt, d.h. unter Einschluss eines generativen Fertigungsverfahrens hergestellt. Durch das generative Formen wird in bevorzugten Ausführungen die fertige oder zumindest endkonturnahe Geometrie erhalten, die keiner weiteren Bearbeitung oder allenfalls einer geringfügigen Nachbearbeitung bedarf.

Zur Herstellung der Verbundstruktur kann die Funktionsstruktur separat von der Basisstruktur generativ geformt und in einem späteren Schritt mit der Basisstruktur gefügt werden, wobei diese Fügeverbindung auf Stoffschluss, Formschluss oder Reibschluss beruhen kann. Das Wort "oder" wird hier wie auch sonst von der Erfindung im üblichen Sinne als "inklusiv oder" verstanden, umfasst also sowohl die Bedeutung von "entweder... oder" als auch die Bedeutung von "und", soweit sich aus dem jeweils konkreten Zusammenhang nicht ausschließlich nur eine der beiden Bedeutungen ergeben kann. Bezogen auf die Fügeverbindung bedeutet dies, dass die Funktionsstruktur in einer ersten Variante ausschließlich stoffschlüssig, in einer zweiten Variante ausschließlich kraftschlüssig, in einer dritten Variante ausschließlich formschlüssig, in weiteren Varianten durch jeweils genau zwei dieser Verbindungsarten, insbesondere durch Form- und Kraftschluss, wie etwa mittels Schraubverbindung, und in noch einer weiteren Variante auch unter Einschluss aller drei Verbindungsarten mit der Basisstruktur gefügt sein kann.

Gegenstand der Erfindung ist auch eine Verbundstruktur, bei der die Funktionsstruktur generativ an der Basisstruktur geformt ist, wobei durch das generative Formen auch gleich eine feste Verbindung, vorzugsweise ein fester Stoffschluss, zwischen Basisstruktur und Funktionsstruktur erhalten wird. In derartigen Ausführungen wird die Funktionsstruktur auf der Basisstruktur generativ aufgebaut. Obgleich einer stoffschlüssigen Verbindung unmittelbar durch den generativen Aufbau der Vorzug gegeben wird, kann die Verbindung von Basisstruktur und Funktionsstruktur stattdessen oder zusätzlich kraft- oder formschlüssig sein. So weist die Basisstruktur ein oder mehrere hinterschnittige Verbindungselemente auf, das oder die beim generativen Formen der Funktionsstruktur eingeformt wird oder werden, so dass sich die Funktionsstruktur an dem oder den Verbindungselementen form- oder kraftschlüssig verankert. Auf diese Weise können Basisstruktur und Funktionsstruktur aus in weiten Bereichen frei wählbaren Werkstoffen gefertigt werden, während für eine stoffschlüssige Verbindung die Werkstoffe zumindest soweit aufeinander abzustimmen sind, dass der Stoffschluss beim generativen Formen entsteht.

Für die Erzeugung der Funktionsstruktur kommt grundsätzlich jedes generative Fertigungsverfahren in Frage. Als Synonym für das generative Formen bzw. Fertigen kann auch von einem additiven Formen bzw. Fertigen gesprochen werden. Bevorzugt wird die Funktionsstruktur in einem Laser generativ bzw. additiv geformt. Zur Formung wird ein fließfähiger Werkstoff schichtweise aufgetragen. In der einen Verfahrensvariante - dem separaten Formen - wird der Ausgangswerkstoff auf eine Unterlage in einem Fertigungsautomaten und in der anderen Verfahrensvariante - dem integriert generativen Aufbau - unmittelbar auf die Basisstruktur aufgetragen und die gewünschte Topologie jeweils schichtweise aufgebaut. Der Werkstoff wird schichtweise durch Energieeintrag verfestigt, bevorzugt mittels Laser. Der Werkstoff kann insbesondere ein Pulverwerkstoff sein. Bevorzugt handelt es sich um ein Metallpulver. Lasersintern oder Laserschmelzen ist/ sind bevorzugte Verfahren zur generativen Formung der Funktionsstruktur.

Das separat generative Formen hat den Vorteil, dass die Funktionsstruktur bis zu einer gewissen Größe in einem üblichen 3D-Automaten erzeugt werden kann. Beim separat generativen Formen kann bereits die Funktionsstruktur auch als Kompositstruktur hergestellt werden, um einen oder mehrere geometrisch einfache Bereiche der Funktionsstruktur, beispielsweise ein oder mehrere Fügeelemente, wie etwa einen Fügeflansch, auf herkömmliche Weise zu fertigen, beispielsweise als Blechformteil(e). Die jeweilige herkömmlich gefertigte Substruktur wird mit einer generativ geformten Substruktur gefügt. Das generative Formen kann auf geometrisch bzw. topologisch komplexe Strukturbereiche beschränkt und ein topologisch einfacher Strukturbereich kann in einem bewährten Verfahren der Massenfertigung hergestellt werden.

Ein Vorteil des integriert generativen Formens ist, dass Basis- und Funktionsstruktur nicht in einem zusätzlichen Schritt erst gefügt werden müssen. Ferner können durch das integriert generative Fügen Bauteiltoleranzen der Basisstruktur kompensiert werden. Beide Verfahrensweisen erlauben es, die Funktionsstruktur geometrisch bzw. topologisch an eine vorgegebene Topologie der Basisstruktur anzupassen, um beispielsweise die Kontaktfläche der beiden Strukturen zu maximieren oder Räume zu nutzen, in die herkömmlich gefertigte Funktionsstrukturen nicht oder nur mit ungleich höherem Herstellaufwand eingepasst werden können.

Die Basisstruktur kann ebenfalls in einem generativen Fertigungsverfahren geformt werden, in bevorzugten Ausführungen wird die Basisstruktur jedoch mittels eines oder mehrerer anderer Verfahren gefertigt. Die Basisstruktur kann insbesondere ein Gusssteil oder eine Struktur mit Gussgefüge sein, die nach gießtechnischer oder sintertechnischer Urformung optional durch Umformung oder optional spanende Bearbeitung fertiggestellt wurde. Die Basisstruktur oder die Funktionsstruktur kann oder können jeweils zwar grundsätzlich eine Kunststoffstruktur sein, bevorzugt sind beide jedoch Metallstrukturen. Die Basisstruktur oder die Funktionsstruktur kann oder können jeweils auch eine Kompositstruktur aus beispielsweise Metall und Kunststoff sein, wobei sie allerdings wenigstens im gemeinsamen Verbindungsbereich bevorzugt aus metallenen Werkstoff bestehen. Wird die Funktionsstruktur unmittelbar an der Basisstruktur generativ geformt, ist der Werkstoff der Funktionsstruktur auf den Werkstoff der Basisstruktur oder den Werkstoff der Basisstruktur im Verbindungsbereich, in dem die Funktionsstruktur aufgebaut wird, zumindest soweit angepasst, dass die mit dem Werkstoff der Basisstruktur in Wechselwirkung tretende(n) untere(n) Schicht(en) der Funktionsstruktur mit dem Werkstoff der Basisstruktur die für den festen Stoffschluss erforderliche Wechselwirkung eingehen.

Die Basisstruktur kann eine Struktur sein, die ausschließlich oder zumindest primär eine strukturelle Funktion erfüllt. Sie kann insbesondere der Aufnahme oder Verteilung von Kräften oder Momenten dienen, beispielsweise ein Längsträger, Querträger oder eine Säule der Fahrzeugkarosserie oder nur ein Abschnitt solch einer Struktur sein. Sie kann im Bereich einer Bodengruppe oder eines Aufbau der Karosserie angeordnet sein. Zusätzlich oder anstelle einer Kräfte oder Momente aufnehmenden oder verteilenden Funktion kann die Basisstruktur auch einen Flächenbereich der Außenhaut der Fahrzeugkarosserie, beispielsweise ein Radhaus, eine Seitenwand oder einen Kotflügel oder nur einen Teilbereich solch einer Schalenstruktur bilden. Sie kann auch ein dem Innenraum eines Fahrzeugs zugewandtes Strukturteil, beispielsweise ein Blechformteil sein. Die Basisstruktur kann insbesondere ein Blechformteil oder Gussteil sein, bevorzugt aus einem Metallwerkstoff. Grundsätzlich kann die Basisstruktur aber auch ein Kunststoffteil, beispielsweise ein faserverstärktes Kunststoffteil oder ein Organoblech sein. Der Werkstoff, aus dem die Funktionsstruktur hergestellt wird, ist vorteilhafterweise an den Werkstoff der Basisstruktur angepasst, insbesondere in Verfahren, in denen die Funktionsstruktur generativ an der Basisstruktur aufgebaut wird.

Die Funktionsstruktur kann eine oder mehrere strukturelle Funktionen, gegebenenfalls ausschließlich strukturelle Funktion erfüllen. So kann sie die Basisstruktur verstärken oder versteifen oder als Verteiler dienend Kräfte oder Momente auf unterschiedliche Bereiche der Basisstruktur verteilen, beispielsweise nur innerhalb der Basisstruktur verteilen, oder als Verbinder für eine oder in einer Fügeverbindung der Verbundstruktur mit einer anderen Struktur dienen. In derartigen Ausführungen kann die Funktionsstruktur eine oder mehrere strukturelle Funktionen der Basisstruktur fördern oder stattdessen oder zusätzlich eine andere strukturelle Funktion, eine strukturelle Zusatzfunktion, erfüllen.

Anstelle oder zusätzlich zu einer strukturellen Funktion kann die Funktionsstruktur aber auch eine Funktion anderer Art erfüllen, wie insbesondere der Ein- oder Ausleitung oder Durchleitung eines oder mehrerer Medien dienen. Bei dem oder den Medien kann es sich um ein oder mehrere Fluide, nämlich Gase oder Flüssigkeiten, oder Versorgungs- oder Signalleitungen für elektrische Energie oder elektrische oder optische Signale handeln. Die Funktionsstruktur kann auch selbst beispielsweise einen Wellenleiter für die Übertragung elektromagnetischer Wellen bilden. So kann die Funktionsstruktur alleine oder in Kombination mit der Basisstruktur oder einer anderen Struktur eines Fahrzeugs, insbesondere der Fahrzeugkarosserie oder des Anbauteils, einen Medienkanal für Kraftstoff, Schmieröl, Kühlmittel, Druckgas für ein pneumatisches Aggregat oder Unterdruckgas für beispielsweise ein System zur Bremskraftverstärkung bilden. Die Funktionsstruktur kann den Medienkanal vollständig umgeben. Sie kann in Abwandlungen auch nur einen Teil des Umfangs bilden, während der Umfang des betreffenden Medienkanals mittels der Basisstruktur oder der anderen Struktur geschlossen wird. Handelt es sich um einen Kabelkanal, muss solch ein Medienkanal über seinen Umfang nicht unbedingt geschlossen sein. Ein Medienkanal, dessen Umfangswand von der Basisstruktur und der Funktionsstruktur in Kombination gebildet wird, kann insbesondere mittels einer auf der Basisstruktur generativ geformten Funktionsstruktur erzeugt werden.

Anstelle eines Medienkanals oder auch in Kombination mit einem Medienkanal, kann die Funktionsstruktur alleine oder in Kombination mit der Basisstruktur oder einer anderen Struktur eines Fahrzeugs, etwa einer anderen Struktur der Fahrzeugkarosserie oder des Anbauteils, ein Reservoir für ein Fluid, beispielsweise einen Druckgas- oder Kühlflüssigkeitsspeicher, bilden. Noch ein Beispiel ist ein Kraftstofftank, den die Funktionsstruktur oder von dem die Funktionsstruktur einen Teil der Tankwand bilden kann.

Die Funktionsstruktur kann eine Anschlussstruktur für einen mechanischen Anschluss, optional auch für einen Medienanschluss der Basisstruktur an eine andere Struktur der Fahrzeugkarosserie oder eines die Fahrzeugkarosserie aufweisenden Fahrzeugs sein. So kann die Funktionsstruktur insbesondere ein Schweißflansch zum Widerstandspunktschweißen oder eine andere Schweißverbindung oder ein Schraubflansch mit einem oder mehreren Schraubdurchgängen oder Schraubbolzen sein. Die Funktionsstruktur kann insbesondere dann eine Anschlussstruktur sein, wenn die Basisstruktur einen Medienkanal für die Einleitung, Ausleitung oder Durchleitung eines fluiden Mediums oder eines oder mehrerer Kabel für elektrische Energie oder elektrische oder optische Signale bildet. Die Funktionsstruktur kann in derartigen Ausführungen beispielsweise an einem Ende der Basisstruktur angeordnet sein, um die Basisstruktur mechanisch mit der anderen Struktur zu verbinden. In der Zusatzfunktion als Medienanschluss, beispielsweise als Fluidanschluss, kann die Funktionsstruktur neben der mechanischen Verbindung für einen fluiddichten Anschluss sorgen.

Die Funktionsstruktur kann alleine oder gemeinsam mit der Basisstruktur oder einer anderen Struktur eines Fahrzeugs, beispielsweise der Fahrzeugkarosserie oder des Anbauteils, einen von Temperierfluid durchströmbaren Wärmetauscher bilden. Generativ können insbesondere innere Wände des Wärmetauschers geformt werden, welche einen oder mehrere Fluidkanäle des Wärmetauschers seitlich begrenzen. Durch die generative Fertigung können die Fluidkanäle mit nahezu beliebigem Verlauf geformt und daher optimal an die räumlichen Bedingungen am Einbauort angepasst werden, wodurch sich beispielsweise die Kontaktfläche mit einem zu temperierenden Objekt im Vergleich zu herkömmlich gefertigten Wärmetauschern vergrößern lässt. Über die große, generativ geformte Kontaktfläche kann Wärme auf vergleichsweise kleinem Raum zwischen den generativ geformten Strukturen und dem Temperierfluid ausgetauscht und durch Wärmeleitung zur äußeren Kontaktfläche mit der zu temperierenden Fahrzeugkomponente transportiert werden. Die mit dem Temperierfluid in Kontakt stehenden Strukturen, insbesondere Kanalwände oder andere Wärmeaustauschstrukturen, können gemeinsam beispielsweise eine zelluläre Struktur bilden oder ein System von Temperierkanälen, deren Verlauf spezifisch auf die lokale Wärmeverteilung des zu temperierenden Objekts abgestimmt ist. Jedenfalls kann durch das generative Formen ein Wärmetauscher mit ihm Vergleich zum Volumen großer innerer, vom Temperierfluid benetzbarer Oberfläche geschaffen werden.

In ersten Ausführungen wird der Wärmetauscher insgesamt generativ gefertigt. In zweiten Ausführungen werden die Kanalwände der Fluidkanäle in oder an einem vorgefertigten Gehäuseteil generativ geformt. Das Gehäuseteil kann beispielsweise ein metallenes Gussteil oder aus Metallblech geformt sein. Der unter Einschluss des generativen Fertigungsverfahrens erzeugte Wärmetauscher wird mit der Basisstruktur gefügt. In dritten Ausführungen werden die Kanalwände unmittelbar auf der Basisstruktur generativ geformt. Ein bevorzugtes Anwendungsbeispiel ist die Kühlung von Batterien oder des gesamten Batteriesystems für einen Elektroantrieb eines Elektrofahrzeugs oder eines Ladegeräts für Batterien des Elektroantriebs. In derartigen Anwendungen stehen typischerweise nur kleine Wärmeaustauschflächen zur Verfügung, so dass entsprechend hohe Wärmeleistungen übertragen werden müssen. Die generative Fertigung filigraner Strukturen, wie etwa von Kanalwänden, erlaubt eine wesentliche Steigerung der Leistung von Wärmetauschern. Verlauf und Querschnitt der Kühlkanäle können auf die Erfordernisse genauer als bei herkömmlichen Verfahren angepasst werden. Mittels generativer Formung von Kanalwänden oder anderer Strukturen eines Wärmetauschers können ferner Räume genutzt werden, die sich bei konventioneller Fertigung von Wärmetauschern nicht nutzen lassen. Das gleiche gilt für die weiter oben erläuterten Medienkanäle, die beispielsweise auch Zu- oder Abführkanäle zu oder von einem Wärmetauscher, insbesondere der erfindungsgemäßen Art, sein können.

In den Ausführungen, in denen die Funktionsstruktur separat von der Basisstruktur mittels eines generativen Fertigungsverfahrens erzeugt wurde, kann die Funktionsstruktur entweder nur zu einem Teil oder im Ganzen ausschließlich generativ geformt sein und entsprechend einen oder mehrere generativ geformte Fügebereiche aufweisen, in dem oder denen die Funktionsstruktur mit der Basisstruktur fest gefügt ist. Fest gefügt bedeutet in diesem Zusammenhang, dass die Funktionsstruktur mit der Basisstruktur so verbunden sein kann, dass die Strukturen relativ zueinander keine Bewegungen ausführen können. Funktionsstruktur und Basisstruktur können aber auch in einer Weise fest miteinander gefügt sein, dass die Funktionsstruktur relativ zur Basisstruktur beweglich ist, beispielsweise eine Schwenkbewegung ausführen kann. In derartigen Ausführungen weist die Funktionsstruktur ein generativ geformtes Fügeelement in Form eines Gelenkelements, beispielsweise in Form eines Wellenelements oder Buchsenelements für eine drehgelenkige Verbindung mit der Basisstruktur auf. Die Basisstruktur umfasst entsprechend ein mit dem Fügeelement der Funktionsstruktur zusammenwirkendes Gelenkgegenelement. Ist die Funktionsstruktur einschließlich eines oder mehrerer Fügebereiche generativ geformt, kann sie aber insbesondere unbeweglich fest mit der Basisstruktur gefügt sein, etwa durch Stoffschluss. Bevorzugte Stoffschlussverbindungen sind Schweißverbindungen, aber auch Lötverbindungen, grundsätzlich kann der Stoffschluss auch eine Klebeverbindung sein. Sie kann auch einen oder mehrere Fügebereiche für jeweils eine kraft- oder formschlüssige Verbindung, beispielsweise eine Schraubverbindung aufweisen.

Eine separat von der Basisstruktur generativ geformten Funktionsstruktur umfasst einen generativ geformten Strukturkörper und ein mit dem Strukturkörper fest verbundenes Fügeelement, das in einem Basisfügebereich der Basisstruktur mit der Basisstruktur wie vorstehend erläutert fest gefügt ist. Das Fügeelement kann wie vorstehend ebenfalls bereits erläutert unmittelbar bei der generativen Formung der Funktionsstruktur erzeugt werden, d.h. gemeinsam mit dem Strukturkörper. Das Fügeelement kann stattdessen aber auch auf andere Weise hergestellt und mit dem generativ geformten Strukturkörper fest gefügt sein. Die Fügeverbindung des Fügeelements mit dem Strukturkörper kann absolut fest sein, insbesondere kann es sich um einen Stoffschluss, wie etwa eine Schweiß- oder Lötverbindung, handeln. Grundsätzlich kann das Fügelement jedoch auch wie vorstehend bereits zur Fügeverbindung von Basisstruktur und Funktionsstruktur erläutert mit dem Strukturkörper in einer Weise fest gefügt sein, die eine Bewegung des Fügeelements relativ zum Strukturkörper bzw. des Strukturkörpers relativ zum Fügeelement gestattet, beispielsweise eine Schwenkbewegung. In derartigen Ausführungen bildet der Strukturkörper ein Gelenkelement und das Fügeelement ein Gelenkgegenelement der Gelenkverbindung von Strukturkörper und Fügeelement.

Ein separat vom Strukturkörper gefertigtes und mit dem Strukturkörper gefügtes Fügeelement der Funktionsstruktur kann insbesondere ein Blech sein, beispielsweise ein einfach planes Blechstück oder vorzugsweise ein an die Oberfläche des Basisfügebereichs der Basisstruktur geometrisch angepasstes Blech. Strukturkörper und Fügeelement können kraftschlüssig oder formschlüssig oder stoffschlüssig miteinander gefügt sein. Das Fügeelement kann aber beispielsweise auch ein Klipp- oder Rast- oder Klemmelement sein, das vorteilhafterweise beim generativen Formen des Strukturkörpers umformt und dadurch im Strukturkörper verankert wird, um die Funktionsstruktur mittels Klipp- oder Rast- oder Klemmverbindung mit der Basisstruktur zu verbinden.

In bevorzugten Ausführungen sind der Strukturkörper und das Fügeelement stoffschlüssig miteinander gefügt, wobei vor allem eine Schweißverbindung oder Lötverbindung in Frage kommt. So können der Strukturkörper und das Fügeelement insbesondere in Ausführungen, in denen das Fügeelement aus einem Blech geformt ist, mittels einer Überlapp-Schweißverbindung oder -Lötverbindung miteinander verbunden sein. Zur Herstellung solch einer Überlappverbindung werden das Fügeelement und der Strukturkörper miteinander kontaktiert, so dass eine Vorderseite des Fügeelements dem Strukturkörper zugewandt ist. Zum Schweißen erforderliche Energie kann mittels eines Energiestrahls, vorteilhafterweise eines Laserstrahls, von der Rückseite des Fügeelements her eingebracht werden. Der Energiestrahl wird in derartigen Verfahren auf die vom Strukturkörper abgewandte Rückseite des Fügeelements gerichtet. Es wird sozusagen verdeckt geschweißt. Bevorzugt handelt es sich um ein Schweißen ohne Zusatzwerkstoff. Zur Herstellung einer Lötverbindung kann ein erwärmtes Lot auf die Vorderseite des Fügeelements oder auf den Strukturkörper in Form eines Lötbads aufgebracht und Strukturkörper und Fügeelement kontaktiert und mittels Lötverbindung gefügt werden.

Die Funktionsstruktur umfasst in zweckmäßigen Ausführungen mehrere Fügeelemente, die jeweils im vorstehend erläuterten Sinne fest mit dem Strukturkörper gefügt oder bereits Bestandteil des Strukturkörpers sind, wobei die Erläuterungen zu dem einen Fügeelement für die mehreren Fügeelemente jeweils gelten. Entsprechend ist die mit der Basisstruktur gefügte Funktionsstruktur vorteilhafterweise an mehreren Stellen jeweils mit der Basisstruktur im erläuterten Sinne fest gefügt. Ein Vorteil einer Funktionsstruktur mit generativ geformtem Strukturkörper und einem oder mehreren anderweitig geformten und mit dem Strukturkörper gefügten Fügeelementen ist, dass die generative Formung auf die Erzeugung komplexer Geometriebereiche beschränkt und geometrisch einfachere Fügeelemente oder das gegebenenfalls nur eine einzige Fügeelement in einem herkömmlichen Fertigungsverfahren besonders preiswert hergestellt werden kann oder können. Bevorzugt wird, wie bereits erwähnt, eine Kompositstruktur mit generativ gefertigtem Strukturkörper und einem oder mehreren Fügeelementen aus Blech.

Die generative Fertigung eignet sich in besonderem Maße, die Funktionsstruktur oder einen oder mehrere Teilbereiche der Funktionsstruktur in topologisch optimierter Form zu erzeugen, beispielsweise nach bionischen Grundsätzen zu gestalten. So kann die Funktionsstruktur zur Verteilung von Kräften oder Momenten eine oder mehrere Verteilerstreben oder -wände umfassen, die nach dem Vorbild einer biologischen Skelett- oder Zellstruktur geformt sind, beispielsweise nach Verlauf oder Querschnitt oder Materialstärke. Die Funktionsstruktur kann eine oder mehrere Hohlstreben aufweisen, die vorzugsweise der Verteilung von Kräften oder Momenten dienen, die jeweils innere Verstärkungselemente aufweisen. Die Verstärkungselemente können miteinander insbesondere eine innere Gitterstruktur oder zelluläre Struktur bilden. Die jeweilige Hohlstrebe kann vorteilhafterweise nach dem Vorbild eines Knochens gestaltet sein.

Die Erfindung betrifft nicht nur eine Verbundstruktur als solche, d.h. alleine oder innerhalb der Fahrzeugkarosserie oder des Anbauteils, sondern auch ein Verfahren zum Herstellen einer Verbundstruktur. In dem Verfahren wird eine Funktionsstruktur durch Auftragen und Verfestigen von Materialschichten generativ geformt. Das generative Formen wird in einer integriert generativen Verfahrensvariante auf einer Basisstruktur für eine Fahrzeugkarosserie oder ein Anbauteil einer Fahrzeugkarosserie durchgeführt. Durch das Auftragen und Verfestigen wird die Funktionsstruktur gleichzeitig auch kraft- oder formschlüssig oder vorzugsweise stoffschlüssig mit der Basisstruktur verbunden. In einer anderen Verfahrensvariante wird die Funktionsstruktur separat von der Basisstruktur generativ geformt und mit der Basisstruktur in einem nachgelagerten Schritt gefügt, um die Verbundstruktur zu erhalten.

In der integriert generativen Verfahrensvariante können einer elektronischen Steuerung einer Auftrags- und Verfestigungseinrichtung Geometriedaten der Funktionsstruktur und der Basisstruktur, insbesondere Geometriedaten aus einem CAD-Modell der Funktionsstruktur und einem CAD-Modell der Basisstruktur, aufgegeben werden. Die Steuerung steuert die zum Materialauftrag und zur Verfestigung des aufgetragenen Materials stattfindende Bewegung der Auftrags- und Verfestigungseinrichtung relativ zur positionierten Basissstruktur oder alternativ die Bewegung der Basisstruktur relativ zur Auftrags- und Verfestigungseinrichtung anhand der Geometriedaten von Funktions- und Basisstruktur.

Bei separatem Fertigen von Basisstruktur und Funktionsstruktur kann ein Strukturkörper der Funktionsstruktur generativ geformt und, falls der Strukturkörper bereits ein oder mehrere Fügeelemente aufweist, mit der Basisstruktur gefügt werden. In einer bevorzugten Variante wird ein Strukturkörper der Funktionsstruktur generativ geformt und mit einem oder mehreren separat von diesem Strukturkörper gefertigten Fügeelementen versehen, d. h. mit einem oder mehreren Fügeelementen gefügt. Die in der Variante als Kompositstruktur erhaltene Funktionsstruktur wird mittels des oder den Fügeelementen mit der Basisstruktur gefügt.

Das bevorzugte Anwendungsfeld ist wie bereits erwähnt der Automobilbau. Durch die Steigerung der Funktionalität der Basisstruktur oder Erweiterung dieser Erstfünktionalität durch eine erst durch die generativ geformte Funktionsstruktur eingeführte Zweitfunktion, wie etwa die Erfüllung einer Wärmetauscherfunktion oder Schaffung eines Medienkanals, können das Gewicht und der Raumbedarf trotz verbesserter oder erweiterter Funktionalität reduziert werden. Innerhalb des Automobilbaus kann die Erfindung insbesondere bei Elektrofahrzeugen, wie reinen Elektrofahrzeugen oder Hybridfahrzeugen, aber auch bei wasserstoff- oder gasbetriebenen Fahrzeugen sowie mittels Brennstoffzelle angetriebenen oder mit Energie versorgten Fahrzeugen nutzbringend eingesetzt werden.

Die Erfindung ist nicht nur für den Automobilbau von Vorteil, sondern für den Fahrzeugbau im Allgemeinen. Es können auch Strukturteile von Schienenfahrzeugen, Luftfahrzeugen und Wasserfahrzeugen erfindungsgemäß veredelt sein oder werden. Entsprechend kann die Basisstruktur beispielsweise ein Strukturteil eines Rumpfwerks, Tragwerks oder Leitwerks eines Flugzeugs, eines Schiffs- oder Bootsrumpfs oder eines Fahrgestells oder einer Zelle eines Schienenfahrzeugs sein, um nur einige Beispiele zu nennen.

Vorteilhafte Merkmale werden auch in den Unteransprüchen und deren Kombinationen offenbart.

Nachfolgend werden Ausführungsbeispiele anhand von Figuren erläutert. An den Ausführungsbeispielen offenbar werdende Merkmale bilden jeweils einzeln und in jeder Kombination die Gegenstände der Ansprüche und auch die vorstehend erläuterten Ausgestaltungen vorteilhaft weiter. Es zeigen:
- Figur 1: einen Verbund einer Basisstruktur und einer unmittelbar an der Basisstruktur generativ geformten Funktionsstruktur,
- Figur 2: einen Fügeverbund einer Basisstruktur und einer generativ geformten, mit der Basisstruktur gefügten Funktionsstruktur,
- Figur 3: ein Hohlprofil der generativ geformten Funktionsstrukturen der Figuren 1 und 2,
- Figur 4: einen Wärmetauscher mit generativ geformter Funktionsstruktur,
- Figur 5: einen Teilquerschnitt durch den Wärmetauscher der Figur 5,
- Figur 6: den Wärmetauscher der Figur 4 oder 5 im eingebauten Zustand,
- Figur 7: den Wärmetauscher der Figur 4 oder 5 an einem anderen Einbauort und
- Figur 8: noch einen Verbund einer Basisstruktur und einer generativ geformten Funktionsstruktur.

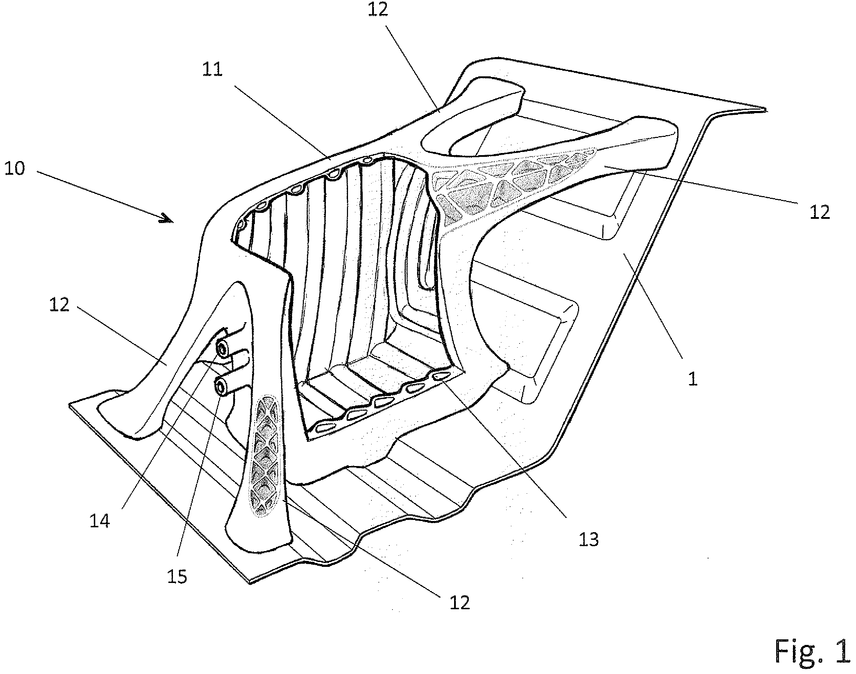

Figur 1 zeigt eine Verbundstruktur eines ersten Ausführungsbeispiels. Die Verbundstruktur umfasst eine Basisstruktur 1 und eine Funktionsstruktur 10, die unbeweglich fest miteinander verbunden sind. Bei der Basisstruktur 1 handelt es sich um ein Strukturteil einer Fahrzeugkarosserie, entweder im eingebauten Zustand oder noch vor dem Einbau. Beispielhaft ist die Basisstruktur 1 als ein Blechformteil mit eingeformten Versteifungen, wie etwa Sicken, gebildet. Die Basisstruktur 1 kann beispielsweise eine Blechstruktur in einem Vorderwagen oder im Bereich des Hecks eines Automobils sein.

Die Funktionsstruktur 10 ist ein in einem generativen Fertigungsverfahren erzeugter Strukturkörper 11. Der Strukturkörper 11, der im ersten Ausführungsbeispiel die gesamte Funktionsstruktur 10 bildet, wurde generativ an der Basisstruktur 1 geformt. Bei der Formung wird ein fließförmiger Werkstoff, vorzugsweise ein Werkstoffpulver, schichtweise aufgetragen und verfestigt, so dass Schicht für Schicht der Strukturkörper 11 und damit gleichzeitig die gesamte Funktionsstruktur 10 erzeugt wird. Beim Auftragen und Verfestigen verbindet sich der Strukturkörperwerkstoff zumindest in der untersten Schicht stoffschlüssig mit dem Werkstoff der Basisstruktur 1. Vorzugsweise wird der Strukturkörper 11, respektive die Funktionsstruktur 10, durch ein Lasersinterverfahren erzeugt.

Die Funktionsstruktur 10 erfüllt die Funktionen eines von Kühlmittel durchströmbaren Wärmetauschers und einer mechanischen Verstärkungsstruktur, insbesondere einer Verteilerstruktur zur Verteilung von Kräften oder Momenten, die im Fahrbetrieb von der Verbundstruktur 1, 10 aufzunehmen sind. Zur Erfüllung der Verstärkungs- bzw. Verteilungsfunktion weist die Funktionsstruktur 10 mehrere Verteilerstreben 12 auf, die aus einem zentralen Bereich des Strukturkörpers 11 nach außen abragen und an ihren Enden der Generierung an der Basisstruktur 1 entsprechend unbeweglich fest mit dieser verbunden sind.

Im zentralen Bereich bildet der Strukturkörper 11 einen Wärmetauscher mit Temperierkanälen 13, die von einem Temperiermittel, ein Kühl- oder Heizmittel, durchströmbar sind. Der Strukturkörper 11 kann Wärme beispielsweise mit einer den Strukturkörper 11 im zentralen Bereich kontaktierenden Fahrzeugkomponente, die zu kühlen oder zu wärmen ist, austauschen. Der vom Strukturkörper 11 gebildete Wärmetauscher kann alternativ auch ein Kühler sein, der in bekannter Weise außen von Luft umströmt und dadurch gekühlt wird, um ein die Temperierkanäle 13 durchströmendes Kühlmittel zu kühlen. Die Temperierkanäle 13 sind über einen Einlass 14 und einen Auslass 15 an einen Temperierfluidkreislauf angeschlossen, beispielsweise an einen Kühlmittelkreislauf des Fahrzeugs, der zur Kühlung eines Antriebsmotors, der ein Verbrennungs- oder ein Elektromotor sein kann, oder eines oder mehrerer elektronischer Steuergeräte oder eines Batteriesystems dient. Mit dem System der Temperierkanäle 13 verbundene weitere Temperierkanäle können sich auch in den Verteilerstreben 12 erstrecken, um die für den Wärmeaustausch verfügbare äußere Oberfläche zu vergrößern. Anstelle eines Kühlmittels kann auch ein Heizmittel die Temperierkanäle 13 durchströmen. In noch einer Alternative kann das gleiche Temperierfluid einmal als Heizmittel und das andere Mal als Kühlmittel den Wärmetauscher durchströmen, beispielsweise vorgewärmt werden, um einen noch kalten Antriebsmotor eines Fahrzeugs oder eine andere Komponente zu wärmen und im betriebswarmen Zustand zu kühlen.

Die Verteilerstreben 12 sind an ihren Enden jeweils stoffschlüssig mit der Basisstruktur 1 verbunden, wobei der feste Stoffschluss unmittelbar bei der Erzeugung des Strukturkörpers 11 entsteht. Mittels der im zentralen Bereich miteinander verbundenen Verteilerstreben 12 werden die Kräfte und Momente über die Fläche der Basisstruktur 1 verteilt. Die Verteilerstreben 12 und der Strukturkörper 11 im Ganzen sind unter der Randbedingung, dass ein effizienter Wärmetauscher erhalten wird, topologisch optimiert, um die Verteilungs- und Verstärkungsfunktion mit möglichst geringem Gewicht zu erfüllen. Das generative Formen begünstigt die topologische Optimierung. Zusätzlich zu den Verbindungen zwischen der Basisstruktur 1 und den Verteilerstreben 12 kann der Strukturkörper 11 auch in seinem zentralen Bereich stoffschlüssig mit der Basisstruktur 1 verbunden sein. Der Strukturkörper 11 kann an einer der Basisstruktur 1 zugewandten Seite flächig oder linienförmig oder auch nur an mehreren punktförmigen Stellen mit der Basisstruktur 1 stoffschlüssig verbunden sein, um die Steifigkeit der Basisstruktur 1 und der Verbundstruktur 1, 10 im Ganzen zu erhöhen. Der stoffschlüssige Verbund von Basisstruktur 1 und Zentralbereich des Strukturkörpers 11 kann ebenfalls unmittelbar bei dem schichtweisen Aufbauen des Strukturkörpers 11 erzeugt werden.

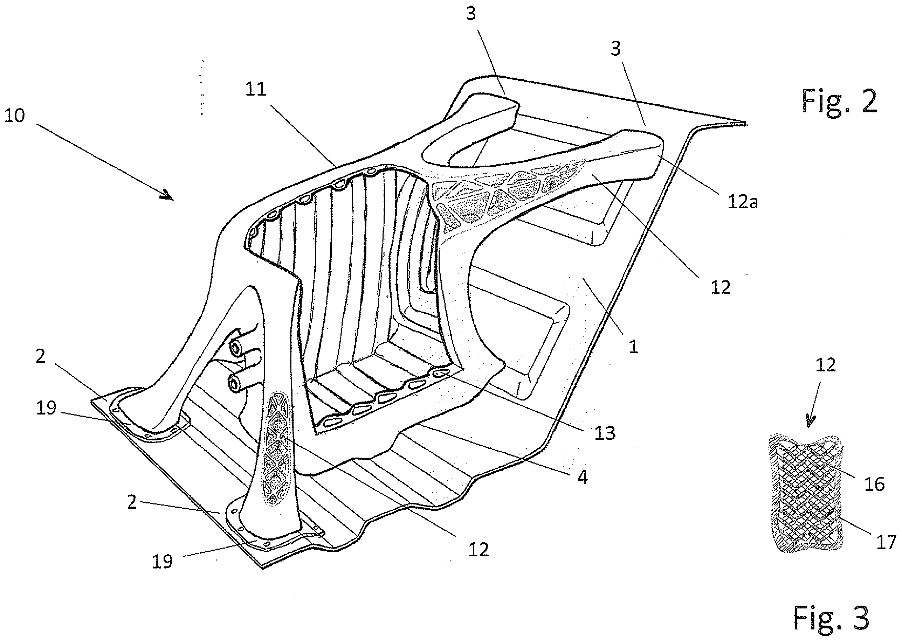

Figur 2 zeigt eine Verbundstruktur eines zweiten Ausführungsbeispiels, die eine dem ersten Ausführungsbeispiel entsprechende Basisstruktur 1 und eine im Unterschied zum ersten Ausführungsbeispiel separat von der Basisstruktur 1 gefertigte Funktionsstruktur 10 umfasst. Die Funktionsstruktur 10 umfasst einen generativ geformten Strukturkörper 11 und Fügeelemente 19, die separat vom Strukturkörper 11 hergestellt wurden und mit dem Strukturkörper 11 fest, im Beispiel unbeweglich fest, gefügt sind. Der Strukturkörper 11 als solcher entspricht nach Form und Funktion demjenigen des ersten Ausführungsbeispiels. Die Funktionsstruktur 10 ist mittels der Fügeelemente 19 in Basisfügebereichen 2 der Basisstruktur 1 fest, im Beispiel unbeweglich fest, mit der Basisstruktur 1 gefügt. Die Fügeverbindungen der Fügeelemente 19 mit der Basisstruktur 1 können beispielsweise Schraubverbindungen sind. Die Fügeelemente 19 sind Blechformteile, die an die Form des jeweils zugeordneten Basisfügebereichs 2 angepasst sind, um flächigen Kontakt mit dem jeweiligen Basisfügebereich 2 zu haben.

Die Fügeelemente 19 sind jeweils mittels Schweißverbindung mit dem Strukturkörper 11 verbunden. Die Schweißverbindung kann vorteilhafterweise jeweils durch Überlapp-Energiestrahlschweißen erzeugt werden. Beim Schweißen steht das jeweilige Fügeelement 19 mit einer Vorderseite im Kontakt mit einem Ende der zugeordneten Verteilerstrebe 12. Geschweißt wird von der Rückseite her, verdeckt. Dazu wird ein Energiestrahl, vorzugsweise ein Laserstrahl, auf die dem Strukturkörper 11 abgewandte Rückseite des Fügeelements 19 gerichtet und schmilzt dieses in seiner Kontaktfläche, an der es mit dem Strukturkörper 11 in direktem Kontakt ist, von hinten auf. Der Strukturkörper 11 wird durch den Energieeintrag oder den Kontakt mit dem Schmelzbereich des Fügeelements 19 ebenfalls geschmolzen oder zumindest angeschmolzen. Beim Erkalten entsteht eine feste Schweißverbindung. Bevorzugt wird um die Enden der Verteilerstreben 12 jeweils umlaufend eine Verbindungsschweißnaht erzeugt.

Im Ausführungsbeispiel sind die Fügeelemente 19 an den Verteilerstreben 12 angeordnet. In Abwandlungen kann oder können ein oder mehrere Fügeelemente 19 im zentralen, die Temperierkanäle 13 aufweisenden Bereich des Strukturkörpers 11 mit diesem gefügt sein, insbesondere mittels Überlapp-Schweißverbindung wie vorstehend beschrieben. Es kann oder können auch eine oder mehrere Verteilerstreben 12 oder der zentrale Strukturkörperbereich unmittelbar, ohne Zwischenschaltung eines separat gefertigten Fügeelements 19, mit der Basisstruktur 1 verbunden sein, insbesondere in der beschriebenen Weise durch Überlappschweißen. Zur Illustration sind zwei der Verteilerstreben 12 in jeweils einem Basisfügebereich 3 und der zentrale Strukturkörperbereich in einem Basisfügebereich 4 jeweils direkt mit der Basisstruktur 1 gefügt, beispielsweise wie beschrieben jeweils mittels Überlapp-Schweißverbindung.

Figur 3 zeigt eine der Verteilerstreben 12 stellvertretend für die anderen in einem Querschnitt. Die Verteilerstrebe 12 ist nach dem Vorbild eines menschlichen oder tierischen Knochens geformt. Sie ist eine Hohlstrebe mit einem äußeren Mantel 16 und innerer Verstärkung, die als Gitternetz oder zelluläres Netz aus zusammenhängenden Verstärkungselementen 17 geformt ist. Das generative Formen ist zur Erzeugung derartiger Strukturen in besonderer Weise geeignet. Umfangskontur und Stärke des Mantels 16 und auch die innere Verstärkung sind im Hinblick auf die zu erfüllende Strukturfunktion, hier die Verteilung von Kräften und Momenten und damit einhergehend die Verstärkung der Basisstruktur 1, und geringes Gewicht optimiert. In den Figuren 1 und 2 ist eine gegenüber dem Querschnitt der Figur 3 bzw. der dort dargestellten inneren Verstärkung gröbere zelluläre innere Verstärkung an zwei der Verteilerstreben 12 exemplarisch für die anderen jeweils in einem Teillängsschnitt erkennbar.

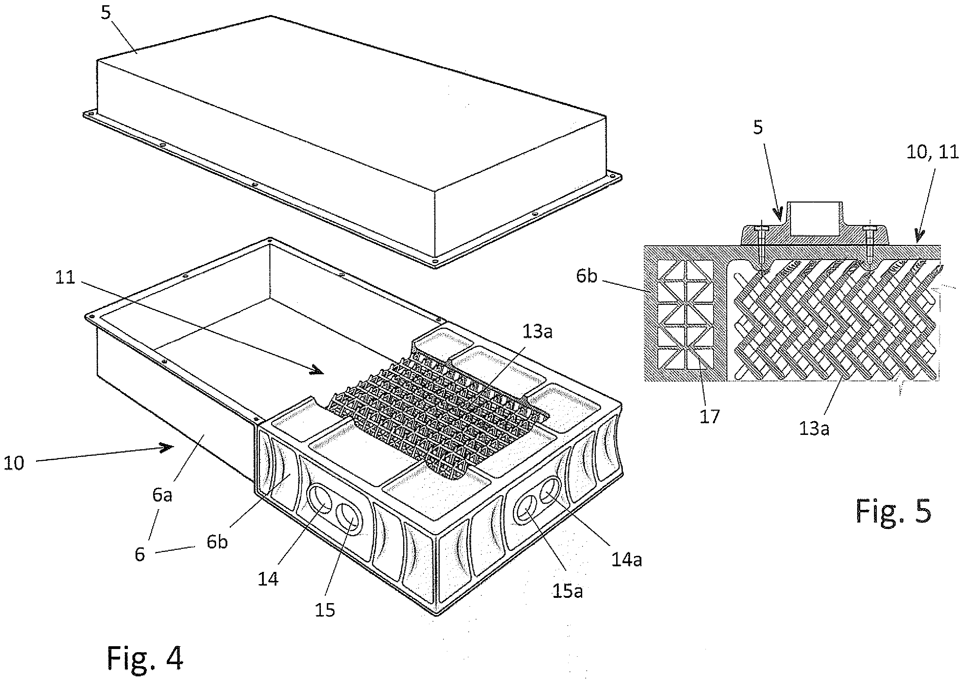

In Figur 4 ist eine Funktionsstruktur 10 eines dritten Ausführungsbeispiels dargestellt. Die Funktionsstruktur 10 ist ebenfalls ein Wärmetauscher. Sie dient der Kühlung einer Wärme erzeugenden Fahrzeugkomponente 5, mit der sie zu diesem Zweck in direktem Wärmeleitkontakt steht. Die Fahrzeugkomponente 5 kann insbesondere ein Ladegerät für ein Batteriesystem zur Versorgung eines elektrischen Antriebsmotors eines Elektrofahrzeugs oder eine andere Leistungselektronik sein. Die Funktionsstruktur 10 umfasst ein Gehäuse 6 und eine im Gehäuse 6 generativ geformte Wärmeaustauschstruktur 13a, die wie bevorzugt, aber nur beispielhaft als gitterförmige oder zelluläre Wärmeaustauschstruktur 13a gebildet ist.

Ein Teil 6a des Gehäuses 6 ist vorgefertigt und kann beispielsweise ein Metallgussteil oder aus Metallblech geformt oder gefügt sein. Die Wärmeaustauschstruktur 13a wird hingegen generativ neben dem vorgefertigten Gehäuseteil 6a geformt und dabei an dem vorgefertigten Gehäuseteil 6a angeformt, so dass die Funktionsstruktur 10 als Einheit erhalten wird. Bei dem generativen Formen wird das Gehäuse 6 im Bereich der Temperierkanäle 13 geschlossen, wobei ein Einlass 14 und ein Auslass 15 für das Temperierfluid geschaffen werden. Ein generativ geformter Gehäuseteil ist mit 6b bezeichnet. Der Gehäuseteil 6b kann gemeinsam mit der Wärmeaustauschstruktur 13a generativ aufgebaut oder separat von dieser geformt werden, entweder vorher oder nach dem Formen der Wärmeaustauschstruktur 13a. Ein weiteres Anschlusspaar aus Einlass 14a und Auslass 15a soll illustrieren, dass mittels der generativen Fertigung die Position der Anschlüsse und der Verlauf der Temperierkanäle 13 flexibel geändert und die Funktionsstruktur 10 dadurch flexibel an unterschiedliche Fahrzeugvarianten, -modelle oder -typen angepasst werden können.

Im vorgefertigten Gehäuseteil 6a kann beispielsweise zu temperierende Elektronik angeordnet werden, entweder anstelle oder zusätzlich zu der Komponente 5. Alternativ können in diesem Gehäuseteil 6a generativ weitere Formelemente der Wärmeaustauschstruktur 13a geformt werden, so dass sich die Wärmeaustauschstruktur 13a sowohl über den gänzlich generativ geformten als auch über den vorgefertigten Gehäuseteil 6a der Funktionsstruktur 10 erstreckt. Mit 11 ist in Analogie zu den beiden anderen Ausführungsbeispielen derjenige Teil der Funktionsstruktur 10 bezeichnet, der generativ geformt ist. In dem in Figur 4 noch freien Gehäuseteil 6a kann beispielsweise ein Teil der Leistungselektronik des genannten Batterieladegeräts angeordnet sein, optional auch die gesamte Leistungselektronik des Batterieladegeräts. Ferner kann es von Vorteil sein, wenn die Wärmeaustauschstruktur 13a eine im Gehäuseteil 6a angeordnete Fahrzeugkomponente umgibt, wobei diese zu temperierende, beispielsweise zu kühlende Fahrzeugkomponente ihrerseits auch in den generativ erzeugten Gehäuseteil 6b hinein ragen kann. In derartigen Ausführungen kann die Wärmeaustauschstruktur 13a die zu temperierende Komponente am Umfang überall umgeben.

Das im Ausführungsbeispiel als Guss- oder vorzugsweise Blechteil vorgefertigte Gehäuseteil 6a kann in Abwandlungen ebenfalls generativ geformt werden, beispielsweise in einem Formungsprozess gemeinsam mit der Wärmeaustauschstruktur 13a. In anderen Abwandlungen kann auch nur die Wärmeaustauschstruktur 13a generativ in einem gänzlich vorgefertigten Gehäuse erzeugt, d.h. schichtweise aufgebaut werden. Zur generativen Fertigung kann auch im dritten Ausführungsbeispiel vorteilhafterweise das Lasersintern oder -schmelzen zum Einsatz gelangen, wobei die Kanalwände 13a und optional ebenfalls generativ geformte Gehäusewandungen durch Auftragen eines Metallpulverwerkstoffs und anschließender Verfestigung durch Energieeintrag mittels Laser erzeugt werden.

Anstelle einer gitterförmigen oder zellulären Wärmeaustauschstruktur 13a, die insbesondere regelmäßig in einem sich wiederholenden Muster geformt sein kann, kann die Funktionsstruktur 10 auch einen oder mehrere, vorzugsweise eine Vielzahl von Temperierkanälen aufweisen, die gemeinsam ein Temperiersystem mit vorgegebenem Strömungsverlauf bilden. Kanalwände solch eines Temperiersystems können in gleicher Weise wie die gitterförmige oder zelluläre Wärmeaustauschstruktur 13a generativ aufgebaut werden, bevorzugt mittels der bereits genannten Verfahren.

Figur 5 zeigt einen Teil eines Querschnitts des Wärmetauschers der Figur 4. Die zu temperierende Fahrzeugkomponente 5 ist in wärmeleitenden Kontakt mit dem Wärmetauscher montiert. Durch die generativ geformte, gitterförmige oder zelluläre Wärmeaustauschstruktur 13a wird ein Wärmetauscher mit im Verhältnis zum Volumen großer innerer Wärmeaustauschfläche geschaffen. Die Wärmeaustauschstruktur 13a ist wärmeleitend mit der im Wärmeleitkontakt mit der Fahrzeugkomponente 5 stehenden Kontaktfläche des Wärmetauschers verbunden, so dass große Wärmeströme zwischen der Kontaktfläche und dem Fluid ausgetauscht werden können.

Wie in Figur 5 beispielhaft illustriert, können generativ geformte Seitenwände des Gehäuseteils 6b gewichtsoptimiert versteift sein, indem beim generativen Formen der Seitenwände diese als Hohlstrukturen mit inneren Verstärkungselementen 17 geformt werden. Die Verstärkungselemente 17 können, wie ebenfalls illustriert, im Hohlraum der jeweiligen Seitenwand eine gitterförmige oder zelluläre Verstärkungsstruktur bilden. Die Formung von Außenwänden als Hohlstruktur, bevorzugt als innenverstrebte und dadurch verstärkte Hohlstruktur, dient vorteilhafterweise auch der thermischen Isolierung des vom Temperierfluid durchströmten Innenraums der Funktionsstruktur 10. Insbesondere kann die äußere Umgebung vor unerwünschter Wärmeableitung und -strahlung geschützt werden, wodurch beispielsweise auch ein Schmor- oder Verbrennungsschutz für benachbarte Komponenten oder auch Personen erhalten wird.

Bei dem Wärmetauscher der vorhergehenden Ausführungsbeispiele kann das System der Temperierkanäle 13 durch eine Wärmeaustauschstruktur entsprechend der Wärmeaustauschstruktur 13a, also eine gitterförmige oder zelluläre Wärmeaustauschstruktur, ersetzt werden.

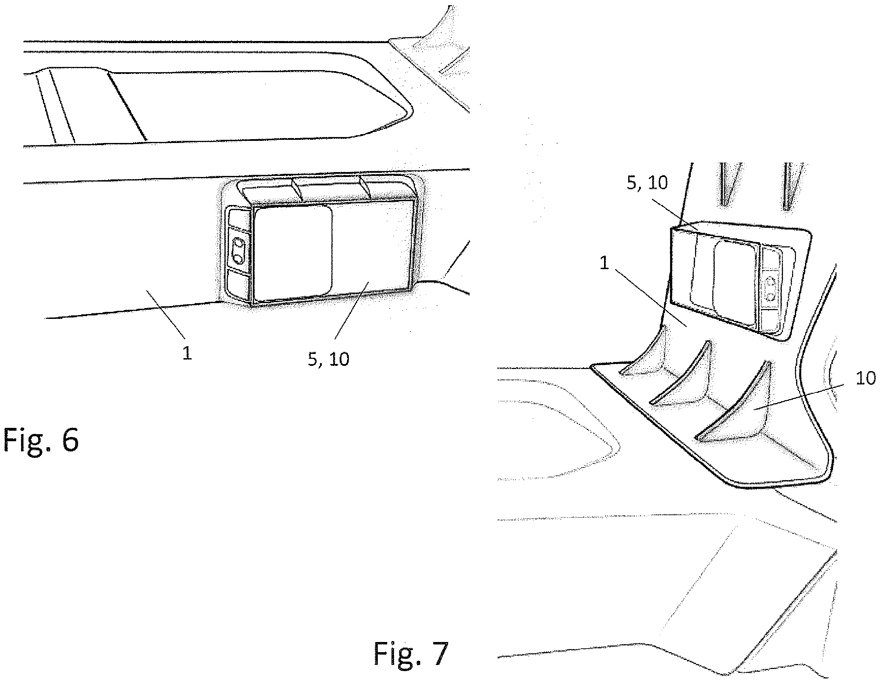

In den Figuren 6 und 7 ist der Wärmetauscher der Figuren 4 und 5 in zwei beispielhaften Anordnungen dargestellt. In Figur 6 sind die den Wärmetauscher bildende Funktionsstruktur 10 und die damit fest verbundene Fahrzeugkomponente 5 im Bereich einer Bodengruppe einer Fahrzeugkarosserie angeordnet. Die Basisstruktur 1 kann beispielsweise ein Längsträger der Fahrzeugkarosserie oder ein Bodenblech oder alternativ beispielsweise auch ein Bodenblech sein, das den Boden eines Kofferraums eines Fahrzeugs bildet. Die Funktionsstruktur 10 kann mit dieser Basisstruktur 1 fest gefügt oder aber unmittelbar an der Basisstruktur 1 in einem generativen Verfahren aufgebaut sein.

Im Ausführungsbeispiel der Figur 7 ist die Funktionsstruktur 10 an einer Basisstruktur 1 angeordnet, entweder mit dieser gefügt oder generativ auf dieser aufgebaut, die als Träger für die Fahrzeugkomponente 5 mit der als Wärmetauscher gebildeten Funktionsstruktur 10 und ferner als Versteifungsstruktur dient und an einer anderen Karosseriestruktur, diese versteifend, befestigt ist oder wird. Die Basisstruktur 1 ist ihrerseits mit Funktionsstrukturen 10 versteift, die unmittelbar an der Basisstruktur 1 generativ geformt oder separat geformt und mit der Basisstruktur 1 gefügt sein können. Die der Versteifung dienenden Funktionsstrukturen 10 sind beispielhaft als wandförmige Versteifungswinkel geformt.

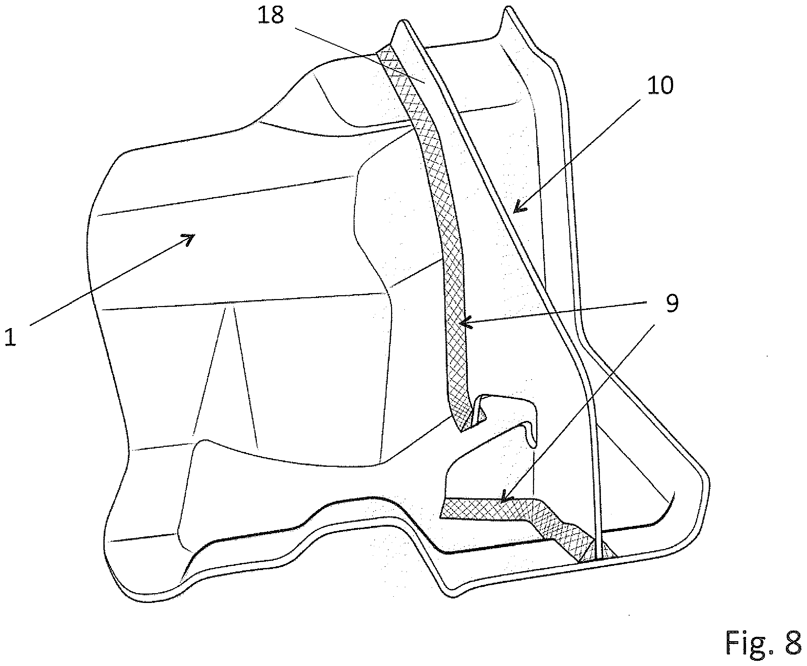

Figur 8 zeigt eine Verbundstruktur mit einer Basisstruktur 1, die einen Karosserieknoten einer Fahrzeugkarosserie bildet oder für die Verwendung als Karosserieknoten vorgesehen ist, und einer generativ geformten Funktionsstruktur 10, die den Karosserieknoten bzw. die Basisstruktur 1 mechanisch verstärkt, so dass insgesamt eine hoch belastbare Verbundstruktur mit geringem Gewicht erhalten wird. Die Basisstruktur 1 kann beispielsweise ein Metallgussteil mit einer für Gussteile vergleichsweise geringen Wandstärke oder insbesondere ein Blechformteil, beispielsweise Tiefziehteil, sein. Die Basisstruktur 1 dient innerhalb der Fahrzeugkarosserie als Verbindungs- und Verteilungsstruktur, die wenigstens zwei andere Strukturen, beispielsweise einen Längsträger und einen Schweller, optional einen Querträger, miteinander verbindet und die Kräfte zwischen diesen Strukturen überträgt und verteilt. Die Funktionsstruktur ist vorteilhafterweise im Hauptkraftfluss der Basisstruktur 1 angeordnet, um beispielsweise Längskräfte zwischen dem beispielhaft genannten Längsträger und dem Schweller zu übertragen. Die Basisstruktur 1 kann insbesondere ein Karosserieknoten sein, wie ihn die EP 12 151 972 offenbart. Diese ältere Anmeldung wird hinsichtlich des Karosserieknotens in Bezug genommen. Die Basisstruktur 1 kann der dortigen Basiswandstruktur entsprechen, und die generativ geformte Funktionsstruktur 10 kann insbesondere die dort offenbarten Verstärkungsrippen ersetzen.

Die Funktionsstruktur 10 kann auf der Basisstruktur 1 generativ aufgebaut werden, wie bereits an den vorhergehenden Ausführungsbeispielen erläutert wurde. Alternativ kann die Funktionsstruktur 10 auch separat von der Basisstruktur 1 generativ geformt und mit der Basisstruktur 1 gefügt werden, wie dies grundsätzlich ebenfalls bereits zu den vorhergehenden Ausführungsbeispielen offenbart wurde. Im Ausführungsbeispiel der Figur 8 ist die Funktionsstruktur 10 mit der Basisstruktur 1 allerdings mittels einer Fügestruktur 9 fest verbunden, die in einem generativen Fertigungsverfahren erzeugt wurde, wofür insbesondere das bereits erläuterte Lasersintern oder -schmelzen in Frage kommt. Durch generatives Formen der Fügestruktur 9 kann diese zur Verbesserung der verstärkenden Funktion der Funktionsstruktur 10 ebenfalls topologisch optimiert werden. So kann die Fügestruktur 9 beispielsweise wie in Figur 8 dargestellt in der Art einer Schweißnaht geformt sein, wobei allerdings die Stärke der Fügestruktur 9 oder deren Querschnittsform gezielt variiert werden kann, um beispielsweise eine optimale Versteifung mit minimalen Materialeinsatz zu erzielen. Die Fügestruktur 9 kann ferner ausgeformte Versteifungsstrukturen beinhalten, beispielsweise Versteifungsstrukturen, die quer zur Funktionsstruktur 10 bzw. quer zum Verlauf der Funktionsstruktur 10 weisen, um dieser quer zu versteifen.

Die Funktionsstruktur 10 ist beispielhaft als Verstärkungs- oder Verteilerwand 18 geformt, um die eingeleiteten Kräfte oder Momente aufzunehmen und zu verteilen oder nur weiterzuleiten. Anstelle einer einfachen Verteilerwand 18 kann die Funktionsstruktur auch verzweigt sein, also zwei oder mehr zueinander geneigt verlaufende Wandbereiche aufweisen, um in unterschiedliche Richtungen weisende Kräfte aufnehmen und besser verteilen bzw. weiterleiten zu können.

Die Funktionsstruktur 10 ist im Ausführungsbeispiel generativ geformt. In weiteren Abwandlungen kann eine derartige Struktur in anderer Weise, beispielsweise als Gussteil oder Blechformteil, geformt und mittels der generativ aufgebauten Fügestruktur 9 mit der Basisstruktur 1 fest verbunden sein. Generativ ist in derartigen Abwandlungen nur die Fügestruktur 9 geformt, die dann als generativ geformte Funktionsstruktur im Sinne der Erfindung verstanden wird.

## Patentansprüche

1. Verbundstruktur umfassend:
(a) eine Basisstruktur (1), die insbesondere ein Blechformteil oder Gussteil sein kann,
(b) und eine generativ geformte Funktionsstruktur (10; 9),
(c) die an der Basisstruktur (1) generativ geformt und durch das generative Formen mit der Basisstruktur (1) verbunden ist,
**wobei**
(d) die Basisstruktur (1) Bestandteil einer Fahrzeugkarosserie oder eines Anbauteils einer Fahrzeugkarosserie ist, und
(e) die Funktionsstruktur mit der Basisstruktur kraft- oder formschlüssig, optional zusätzlich stoffschlüssig, verbunden ist, wobei die Basisstruktur ein oder mehrere hinterschnittige Verbindungselemente aufweist, das oder die durch das generative Formen der Funktionsstruktur eingeformt ist oder sind, so dass die Funktionsstruktur an dem oder den Verbindungselementen form- oder kraftschlüssig verankert ist.

2. Verbundstruktur nach dem vorhergehenden Anspruch, **dadurch gekennzeichnet, dass** die Funktionsstruktur (10) alleine oder gemeinsam mit der Basisstruktur (1) oder einer weiteren Struktur der Fahrzeugkarosserie oder des Anbauteils einen Medienkanal (13, 14, 15) für die Ein-, Aus- oder Durchleitung eines Mediums, wie insbesondere Kraftstoff, Schmiermittel, Hydraulikflüssigkeit, Kühlmittel, Heizmittel, Druckgas, Unterdruckgas, elektrische Energie, elektromagnetische Wellen oder elektrische oder optische Signale, bildet.

3. Verbundstruktur nach einem der vorhergehenden Ansprüche, **dadurch gekennzeichnet, dass** die Funktionsstruktur (10) alleine oder gemeinsam mit der Basisstruktur (1) oder einer weiteren Struktur der Fahrzeugkarosserie oder des Anbauteils einen von Temperierfluid durchströmbaren Wärmetauscher (13, 14, 15) oder ein Reservoir für ein Fluid, beispielsweise einen Kraftstofftank oder Druckgasspeicher, bildet.

4. Verbundstruktur nach wenigstens einem der vorhergehenden Ansprüche, **dadurch gekennzeichnet, dass** die Funktionsstruktur (10) eine Anschlussstruktur für einen mechanischen Anschluss, beispielsweise ein Schweißflansch, optional auch für einen Medienanschluss der Basisstruktur (1) an eine andere Struktur eines die Fahrzeugkarosserie aufweisenden Fahrzeugs ist oder umfasst, wobei die andere Struktur insbesondere ebenfalls Bestandteil der Fahrzeugkarosserie oder des Anbauteils sein kann.

5. Verbundstruktur nach wenigstens einem der vorhergehenden Ansprüche, **dadurch gekennzeichnet, dass** die Funktionsstruktur (10) die Basisstruktur (1) versteift oder Kräfte oder Momente zwischen unterschiedlichen Bereichen der Basisstruktur (1) verteilt, vorzugsweise bionisch geformt oder topologisch optimiert ist.

6. Verbundstruktur nach wenigstens einem der vorhergehenden Ansprüche, **dadurch gekennzeichnet, dass** die Funktionsstruktur (10) einen generativ geformten Strukturkörper (11) und ein vom Strukturkörper (11) gebildetes oder mit dem Strukturkörper (11) fest verbundenes Fügeelement (12a, 19) aufweist, das in einem Basisfügebereich (2, 3, 4) der Basisstruktur (1) mit der Basisstruktur (1) gefügt ist.

7. Verbundstruktur nach dem vorhergehenden Anspruch, **dadurch gekennzeichnet, dass** das Fügeelement (19) separat vom Strukturkörper (11) geformt und kraft- oder form- oder stoffschlüssig mit dem Strukturkörper (11), bevorzugt durch Schweißen oder Löten, vorzugsweise Energiestrahlschweißen, gefügt ist.

8. Verbundstruktur nach einem der zwei vorhergehenden Ansprüche und wenigstens einem der folgenden Merkmale:
(i) das Fügeelement (19) weist ein Guss- oder Sinterpressgefüge auf, das durch eine optionale Umformung modifiziert sein kann;
(ii) das Fügeelement (19) ist ein mit dem Strukturkörper (11) gefügtes Blech.

9. Verbundstruktur nach einem der drei vorhergehenden Ansprüche, **dadurch gekennzeichnet, dass** das Fügeelement (19) den Strukturkörper (11) überlappt und mittels Überlapp-Schweißverbindung oder -Lötverbindung mit dem Strukturkörper (11) verbunden ist.

10. Verbundstruktur nach wenigstens einem der vier vorhergehenden Ansprüche, **dadurch gekennzeichnet, dass** die Funktionsstruktur (10) ein oder mehrere vom Strukturkörper (11) gebildete oder mit dem Strukturkörper (11) jeweils fest verbundene weitere Fügeelemente (12a, 19) aufweist, das oder die mit einer anderen Struktur oder vorzugsweise ebenfalls mit der Basisstruktur (1), jedoch jeweils in einem anderen Basisfügebereich (2) der Basisstruktur (1), gefügt ist oder sind, vorzugsweise wenigstens einem der Ansprüche 6 bis 10 entsprechend gebildet ist oder sind.

11. Verbundstruktur nach wenigstens einem der vorhergehenden Ansprüche, **dadurch gekennzeichnet, dass** die Funktionsstruktur (10) zur Verteilung von Kräften oder Momenten eine oder mehrere Verteilerstreben (12) oder Verteilerwände (18) umfasst, die vorzugsweise bionisch, insbesondere nach dem Vorbild einer biologischen Skelett- oder Zellstruktur geformt ist oder sind.

12. Verbundstruktur nach wenigstens einem der vorhergehenden Ansprüche, **dadurch gekennzeichnet, dass** der Strukturkörper (11) eine oder mehrere Hohlstreben (12), vorzugsweise zur Verteilung von Kräften oder Momenten, umfasst und die eine oder mehreren Hohlstreben (12) jeweils innere Verstärkungselemente (17) aufweisen, die in der jeweiligen Hohlstrebe (12) vorzugsweise eine Gitterstruktur oder zelluläre Struktur bilden.

13. Verbundstruktur nach wenigstens einem der vorhergehenden Ansprüche, **dadurch gekennzeichnet, dass** die generativ geformte Funktionsstruktur (10; 9) mit einer weiteren Struktur verbunden ist, die Bestandteil der Fahrzeugkarosserie oder des Anbauteils ist, und die Funktionsstruktur (10; 9) unmittelbar bei dem generativen Formen mit der weiteren Struktur verbunden, vorzugsweise stoffschlüssig verbunden, oder nach dem generativen Formen mit der weiteren Struktur gefügt wurde.

14. Verbundstruktur nach einem der vorhergehenden Ansprüche, **dadurch gekennzeichnet, dass** die Funktionsstruktur (10) alleine oder gemeinsam mit der Basisstruktur (1) oder einer anderen Struktur des Fahrzeug ein Gehäuse (5, 6) für ein elektronisches oder optisches Bauteil, wie insbesondere ein Steuergerät, eine Leistungselektronik, ein Batterieladegerät, ein Sensor oder eine Leuchte, vorzugsweise für ein Fahrzeug mit elektrischem Haupt- oder Zusatzantrieb, oder ein mit Wasserstoff oder Gas oder mittels Brennstoffzelle betriebenes Fahrzeug, bildet.

15. Verfahren zum Herstellen einer Verbundstruktur, bei dem
(a) eine Funktionsstruktur (10; 9) durch Auftragen und Verfestigen von Materialschichten generativ vorzugsweise mittels Laser geformt und das generative Formen,
(b) an einer Basisstruktur (1) durchgeführt und die Funktionsstruktur (10; 9) dadurch mit der Basisstruktur (1) verbunden wird,
**wobei**
(c) die Funktionsstruktur (10, 9) an einer Basisstruktur (1) für eine Fahrzeugkarosserie oder ein Anbauteil einer Fahrzeugkarosserie generativ geformt wird,
(d) die Basisstruktur ein oder mehrere hinterschnittige Verbindungselemente aufweist, das oder die beim generativen Formen der Funktionsstruktur eingeformt wird oder werden, so dass sich die Funktionsstruktur an dem oder den Verbindungselementen form- oder kraftschlüssig verankert.

16. Verfahren nach dem vorhergehenden Anspruch, bei dem ein Strukturkörper (11) der Funktionsstruktur (10) generativ geformt, ein separat vom Strukturkörper (11) gefertigtes Fügeelement (19) mit dem Strukturkörper (11) gefügt und das Fügeelement (19) im Verfahrensschritt (c) in einem Basisfügebereich (2) der Basisstruktur (1) mit der Basisstruktur (1) gefügt wird.

17. Verfahren nach einem der vorhergehenden Ansprüche, bei dem die Funktionsstruktur (10; 9) generativ bis zu einer weiteren Struktur für die Fahrzeugkarosserie oder das Anbauteil geformt und durch das generative Formen mit der weiteren Struktur fest verbunden oder in einem späteren Verfahrensschritt mit der weiteren Struktur gefügt wird.

## Claims

1. Composite structure, comprising:
(a) a base structure (1) which can be in particular a sheet metal formed part or cast part,
(b) and a generatively formed functional structure (10; 9)
(c) which is generatively formed on the base structure (1) and is connected to the base structure (1) by means of the generative forming,
wherein
(d) the base structure (1) is a component of a vehicle body or an add-on part of a vehicle body, and
(e) the functional structure is connected to the base structure in a frictional or interlocking and optionally also integrally bonded manner, wherein the base structure has one or a plurality of undercut connection elements which is or are formed by the generative forming of the functional structure and so the functional structure is anchored to the connection element(s) in an interlocking or frictional manner.

2. Composite structure as claimed in the preceding claim, **characterised in that** the functional structure (10) forms, on its own or together with the base structure (1) or a further structure of the vehicle body or the add-on part, a media channel (13, 14, 15) for introducing, diverting or transmitting a medium, such as in particular fuel, lubricant, hydraulic fluid, coolant, heating medium, compressed gas, vacuum gas, electrical energy, electromagnetic waves or electrical or optical signals.

3. Composite structure as claimed in any one of the preceding claims, **characterised in that** the functional structure (10) forms, on its own or together with the base structure (1) or a further structure of the vehicle body or the add-on part, a heat exchanger (13, 14, 15), through which a temperature-control fluid can flow, or a reservoir for a fluid, e.g. a fuel tank or compressed gas holder.

4. Composite structure as claimed in at least one of the preceding claims, **characterised in that** the functional structure (10) is or comprises a connecting structure for a mechanical connection, e.g. a welded flange, optionally also for a media connection of the base structure (1) to another structure of a vehicle having the vehicle body, wherein the other structure can be in particular likewise a component of the vehicle body or of the add-on part.

5. Composite structure as claimed in at least one of the preceding claims, **characterised in that** the functional structure (10) stiffens the base structure (1) or repartites forces or moments between different regions of the base structure (1), preferably is bionically formed or topologically optimised.

6. Composite structure as claimed in at least one of the preceding claims, **characterised in that** the functional structure (10) has a generatively formed structural body (11) and a joining element (12a, 19) which is formed by the structural body (11) or is fixedly connected to the structural body (11) and which is joined to the base structure (1) in a base joining region (2, 3, 4) of the base structure (1).

7. Composite structure as claimed in the preceding claim, **characterised in that** the joining element (19) is formed separately from the structural body (11) and is joined to the structural body (11) in a frictional or interlocking or integrally bonded manner, preferably by welding or soldering, preferably energy beam welding.

8. Composite structure as claimed in any one of the two preceding claims and at least one of the following features:
(i) the joining element (19) has a cast or sintered pressed structure which can be modified by optional forming,
(ii) the joining element (19) is a metal sheet which is joined to the structural body (11).

9. Composite structure as claimed in any one of the three preceding claims, **characterised in that** the joining element (19) overlaps the structural body (11) and is connected to the structural body (11) by means of an overlap welded connection or soldered connection.

10. Composite structure as claimed in at least one of the four preceding claims, **characterised in that** the functional structure (10) has one or a plurality of further joining elements (12a, 19) which is/are formed by the structural body (11), is/are connected in each case fixedly to the structural body (11) and is/are joined to another structure or preferably likewise to the base structure (1) but in each case in another base joining region (2) of the base structure (1), preferably is/are formed according to at least one of claims 6 to 10.

11. Composite structure as claimed in at least one of the preceding claims, **characterised in that** the functional structure (10) for repartiting forces or moments comprises one or a plurality of repartitor struts (12) or repartitor walls (18) which is/are formed preferably bionically, in particular according to the model of a biological skeleton or cell structure.

12. Composite structure as claimed in at least one of the preceding claims, **characterised in that** the structural body (11) comprises one or a plurality of hollow struts (12), preferably for repartiting forces or moments and the one or plurality of hollow struts (12) each have inner reinforcing elements (17) which form, in the respective hollow strut (12), preferably a lattice structure or cellular structure.

13. Composite structure as claimed in at least one of the preceding claims, **characterised in that** the generatively formed functional structure (10; 9) is connected to a further structure which is a component of the vehicle body or the add-on part, and the functional structure (10; 9) has been connected to the further structure, preferably connected in an integrally bonded manner, directly during the generative forming or has been joined to the further structure after the generative forming.

14. Composite structure as claimed in any one of the preceding claims, **characterised in that** the functional structure (10) forms, on its own or together with the base structure (1) or another structure of the vehicle, a housing (5, 6) for an electronic or optical component, such as in particular a control device, a power electronics system, a battery charging device, a sensor or a lamp, preferably for a vehicle having an electric main or auxiliary drive, or a vehicle operated with hydrogen or gas or by means of a fuel cell.

15. Method for producing a composite structure, wherein
(a) a functional structure (10; 9) is formed generatively preferably by means of laser by the application and compaction of material layers, and the generative forming
(b) is performed on a base structure (1) and the functional structure (10; 9) is thereby connected to the base structure (1),
wherein
(c) the functional structure (10, 9) is generatively formed on a base structure (1) for a vehicle body or an add-on part of a vehicle body,
(d) the base structure has one or a plurality of undercut connection elements which is or are formed during the generative forming of the functional structure and so the functional structure is anchored to the connection element(s) in an interlocking or frictional manner.

16. Method as claimed in the preceding claim, wherein a structural body (11) of the functional structure (10) is generatively formed, a joining element (19) manufactured separately from the structural body (11) is joined to the structural body (11) and the joining element (19) is joined to the base structure (1) in a base joining region (2) of the base structure (1) in method step (c).

17. Method as claimed in any one of the preceding claims, wherein the functional structure (10; 9) is formed generatively up to a further structure for the vehicle body or the add-on part and is fixedly connected to the further structure by the generative forming or is joined to the further structure in a subsequent method step.

## Revendications

1. Structure composite comprenant :
(a) une structure de base (1), laquelle peut être en particulier une pièce moulée en tôle ou une pièce coulée,
(b) et une structure fonctionnelle formée de façon générative (10 ; 9)
(c) laquelle est formée de façon générative au niveau de la structure de base (1) et est relié à la structure de base (1) par la formation générative,
dans laquelle
(d) la structure de base (1) est une partie composante d'une carrosserie de véhicule ou d'une élément rapporté d'une carrosserie de véhicule, et
(e) la structure fonctionnelle est reliée à la structure de base par complémentarité de formes ou engagement de force, additionnellement en option par adhérence, dans laquelle la structure de base comporte un ou plusieurs éléments de liaison à contre-dépouille, lequel ou lesquels est moulé ou sont moulés par la formation générative de la structure fonctionnelle, de sorte que la structure fonctionnelle est ancrée aux éléments de liaison par complémentarité de formes ou engagement de force.

2. Structure composite selon la revendication précédente, **caractérisée en ce que** la structure fonctionnelle (10) forme, seule ou avec la structure de base (1) ou une structure supplémentaire de la carrosserie de véhicule ou de l'élément rapporté, un canal de milieux (13, 14, 15) permettant l'arrivée, la sortie ou le passage d'un milieu, en particulier tel que carburant, lubrifiant, fluide hydraulique, milieu réfrigérant, milieu chauffant, gaz comprimé, gaz basse pression, énergie électrique, ondes électromagnétiques ou signaux électriques ou optiques.

3. Structure composite selon l'une des revendications précédentes, **caractérisée en ce que** la structure fonctionnelle (10) forme, seule ou avec la structure de base (1) ou une structure supplémentaire de la carrosserie de véhicule ou de l'élément rapporté, un échangeur de chaleur (13, 14, 15) pouvant être parcouru par un fluide thermorégulateur ou un réservoir pour un fluide, en particulier un réservoir de carburant ou un accumulateur de gaz comprimé.

4. Structure composite selon au moins une des revendications précédentes, **caractérisée en ce que** la structure fonctionnelle (10) est ou comprend une structure de raccordement pour un raccordement mécanique, par exemple une bride à souder, en option également pour un raccord de milieux de la structure de base (1) à une autre structure d'un véhicule comportant la carrosserie de véhicule, dans laquelle l'autre structure peut en particulier être également une partie composante de la carrosserie de véhicule ou de l'élément rapporté.

5. Structure composite selon au moins une des revendications précédentes, **caractérisée en ce que** la structure fonctionnelle (10) raidit la structure de base (1) ou repartit les forces ou les couples entre différentes zones de la structure de base (1), et est de préférence formée de manière bionique ou topologiquement optimisée.

6. Structure composite selon au moins une des revendications précédentes, **caractérisée en ce que** la structure fonctionnelle (10) comporte un corps de structure (11) formé de façon générative et un élément d'assemblage (12a, 19) formé par le corps de structure (11) ou relié de manière fixe au corps de structure (11), l'élément d'assemblage étant assemblé avec la structure de base (1) dans une zone d'assemblage de base (2, 3, 4) de la structure de base (1).

7. Structure composite selon la revendication précédente, **caractérisée en ce que** l'élément d'assemblage (19) est formé comme séparé du corps de structure (11) et est assemblé avec le corps de structure (11) par engagement de force ou complémentarité de formes ou adhérence, de préférence par soudage ou brasage, de préférence par soudage par faisceau d'énergie.

8. Structure composite selon l'une des deux revendications précédentes et au moins l'une des caractéristiques suivantes :
(i) l'élément d'assemblage (19) comporte une structure coulée ou frittée sous pression, laquelle peut être modifiée par un formage en option ;
(ii) l'élément d'assemblage (19) est une tôle assemblé avec le corps de structure (11).

9. Structure composite selon l'une des trois revendications précédentes, **caractérisée en ce que** l'élément l'élément d'assemblage (19) chevauche le corps de structure (11) et est relié au corps de structure (11) au moyen d'une soudure ou brasure chevauchante.

10. Structure composite selon l'une des quatre revendications précédentes, **caractérisée en ce que** la structure fonctionnelle (10) comporte un ou plusieurs éléments d'assemblage (12a, 19) supplémentaires formés par le corps de structure (11) ou reliés respectivement de manière fixe au corps de structure (11), lequel ou lesquels est ou sont assemblé(s) avec une autre structure ou de préférence également avec la structure de base (1) mais respectivement dans une autre zone l'élément d'assemblage de base (2) de la structure de base (1), et est ou sont de préférence formé(s) conformément à au moins une des revendications 6 à 10.

11. Structure composite selon au moins une des revendications précédentes, **caractérisée en ce que** la structure fonctionnelle (10) comprend pour la repartition de forces ou de couples une ou plusieurs entretoises de repartition (12) ou parois de repartition (18), laquelle ou lesquelles est ou sont de préférence formée(s) de manière bionique, en particulier d'après le modèle d'une structure biologique de squelette ou de cellule.

12. Structure composite selon au moins une des revendications précédentes, **caractérisée en ce que** le corps de structure (11) comprend une ou plusieurs entretoises creuses (12), de préférence pour la repartition de forces ou de couples, et l'une ou les plusieurs entretoises creuses (12) comportent respectivement des éléments de renforcement internes (17), lesquels forment de préférence dans l'entretoise creuse (12) respective une structure réticulaire ou cellulaire.

13. Structure composite selon au moins une des revendications précédentes, **caractérisée en ce que** la structure fonctionnelle (10 ; 9) formée de façon générative est reliée à une structure supplémentaire, laquelle est une partie composante de la carrosserie de véhicule ou de l'élément rapporté, et la structure fonctionnelle (10 ; 9) est reliée directement à la structure supplémentaire lors de la formation générative, de préférence par adhérence, ou est assemblée avec la structure supplémentaire après la formation générative.

14. Structure composite selon au moins une des revendications précédentes, **caractérisée en ce que** la structure fonctionnelle (10) forme, seule ou avec la structure de base (1) ou une autre structure du véhicule, un boîtier (5, 6) pour un composant électronique ou optique, comme en particulier un dispositif de commande, une électronique de puissance, un dispositif chargeur de batterie, un capteur ou un luminaire, de préférence pour un véhicule à moteur électrique principal ou auxiliaire, ou un véhicule fonctionnant à l'hydrogène ou au gaz ou au moyen d'une pile à combustible.

15. Procédé de fabrication d'une structure composite, dans duquel
(a) une structure fonctionnelle (10 ; 9) est formée de façon générative par application et solidification de couches de matériaux, de préférence au moyen d'un laser, et la formation générative,
(b) est mise en œuvre (1) au niveau d'une structure de base (1) et la structure fonctionnelle (10 ; 9) est reliée de ce fait à la structure de base (1),
dans lequel
(c) la structure fonctionnelle (10 ; 9) est formée de façon générative au niveau d'une structure de base (1) pour une carrosserie de véhicule ou un élément rapporté d'une carrosserie de véhicule,
(d) la structure de base comporte un ou plusieurs éléments de liaison à contre-dépouille, lequel ou lesquels est ou sont moulés lors de la formation générative de la structure fonctionnelle, de sorte que la structure fonctionnelle s'ancre aux éléments de liaison par complémentarité de formes ou engagement de force.

16. Procédé selon la revendication précédente, lors duquel un corps de structure (11) de la structure fonctionnelle (10) est formé de façon générative, un élément d'assemblage (19) réalisé comme séparé du corps de structure (11) est assemblé avec le corps de structure (11) et l'élément d'assemblage (19) est assemblé avec la structure de base (1) dans une zone d'assemblage de base (2) de la structure de base (1) dans l'étape de procédé (c).

17. Procédé selon la revendication précédente, lors duquel la structure fonctionnelle (10 ; 9) est formée de façon générative jusqu'à une structure supplémentaire pour la carrosserie de véhicule ou l'élément rapporté et est reliée de manière fixe à la structure supplémentaire par la formation générative ou est assemblée avec la structure supplémentaire lors d'une étape de procédé ultérieure.
